# EUROPEAN PATENT APPLICATION

(11) **EP 2 009 246 A2**
(43) Date of publication of application: **31.12.2008**
(21) Application number: 08251947.1
(22) Date of filing: 04.06.2008
(51) Int. Cl.: F01D 5/30, B64C 11/06

(54) **A blade mounting**

(30) Priority: 28.06.2007 GB 0712561
(71) Applicant: Rolls-Royce plc, 65 Buckingham Gate London SW1E 6AT (GB)
(72) Inventor: Richards, Martyn, Burton upon Trent DE13 0YJ England (GB)
(74) Representative: Gunn, Michael Alan

(57) **Abstract**

Turboprop and propfan engines generally incorporate blades which have variable pitch to improve operational efficiency. Variable pitch is achieved through a pitch control mechanism (40) at the root of the blade but such mechanisms may fail resulting in the blades turning to define a flat configuration with low drag and therefore the potential for engine damage through over-speeding. Traditional pitch lock and counter weight control mechanisms have disadvantages. By providing a helical bearing in which the mass and radial movement due to centrifugal radial force are utilised it is possible to generate a counter moment to the normal centrifugal turning moment (CTM) to ensure the blade (31; 51) remains in a configuration with at least some drag to limit engine rotational speed. The continuous helical bearing allows for a range of pitch angular positions to be used around a full 360° turn by providing a feathering counter moment from any of those angular positions.

## Description

The present invention relates to blade mountings and more particularly blade mountings utilised in turboprop or propfan engines for aircraft propulsion.

Turboprop and propfan engines utilise low pressure turbines to drive a large propeller through a speed reduction mechanism such as a gearbox or by an interleaved turbine configuration. For a given engine weight with a large propeller such engines accelerate more air than a turbofan engine and so delivers more thrust for a given engine in terms of fuel consumption. There are other advantages in that turboprops are generally lighter and have advantages particularly at lower flight speeds.

In order to improve efficiency the propeller rotors or blades of turboprop and propfan engines incorporate a variable pitch facility. Such variable pitch allows optimisation of aerodynamic performance for engine speed within an operational performance envelope for the engine. The pitch of the propeller is controlled typically through mechanical or hydraulic mechanisms. These variable pitch mechanisms clearly are subject to potential failure during operation. If the variable pitch mechanism should fail it will be understood that there is a natural tendency for the blades to turn towards a flat fine or cross-wise pitch configuration where the blade is substantially flat due to the centrifugal or turning moment created by the propeller aerofoil shape. Such turning towards a flatter pitch orientation produces less drag resistance in the direction of rotation such that a blade in a flat pitch requires little torque compared to when in operating pitch positions for thrust. In such circumstances failure of the variable pitch mechanism can lead to the power turbine and propeller rotor over-speeding. Clearly, with regard to over-speeding there is the potential for further failure of the rotating members as well as possible fragmentation of the blades and other parts leading to distribution of high energy debris about the engine.

Release of high energy debris at least is a clear safety consideration. In such circumstance all propeller engines have a fail safety device to prevent over-speeding. These fail safety devices are generally divided into pitch lock mechanisms and counter weight mechanisms. A pitch lock mechanism effectively locks the pitch of the blades to a set position if the mechanism fails whilst a counter weight mechanism acts to provide a counter moment to the aerofoil centrifugal turning moment in order to turn the blade towards a coarse configuration (fore and aft or feathered) setting which has a higher drag resistance and therefore limits over-speeding. Both such approaches have problems. Pitch lock mechanisms are generally complicated and may leave the blade in a fine or high forward drag position whilst counter weight mechanisms although being effective at turning the blade to a coarser low forward drag position are relatively heavy.

Some variable pitch blade rotors such as described in US Patent 4717312 utilise a ball screw mechanism in order to provide pitch rotation. The ball screw mechanism includes an inner and outer screw trace respectively having a helical groove formed therein along which rotating elements which travel in order to provide pitch rotation. A rotatable driving centrifugal cage is disposed between the inner and outer races with longitudinal slots in which a plurality of rolling element balls is positioned. The balls are located in the slots and are moveable longitudinally, which prevents ball bunching as a result of centrifugal forces. A drive mechanism is utilised with respect to the cage in order to drive the cage for a blade pitch movement. The cage as indicated prevents ball crowding through the centrifugal forces. The screw path will provide coarse pitch seeking turning moments to aid the pitch variation mechanism when turning towards such coarse pitch configurations whilst avoiding the problems with rolling elements bunching during normal operation which may lead to blade instability. Limitations upon pitch angle and roller element sizes must be applied or as outlined in US Patent 4717312 provision provided in the form of a cage for restraining rolling element movement and therefore limitation upon coarse pitch moments provided.

It is also known from US Patent 4948339 to provide a fail safe mechanism for an aircraft propeller. The mechanism comprises a first bearing trace which is angular about a blade shank and having two or more surfaces which are generally helical about the axis. The second, generally helical, bearing trace is fastened to the shank but which is not parallel to the first bearing trace. A plurality of bearing rollers is located between the first and second bearing traces. In such circumstances, a displacing force is generated due to the lack of parallelism between the first and second bearing traces. Thus, will allow some coarse pitch rotation to be provided, but there is a limited in angular rotation achievable.

In accordance with aspects of the present invention there is provided a blade mounting to secure a blade or rotor within a hub, the mounting having a root extending into the hub, the mounting characterised by a helix trace associated with the blade root to define a helix path between them about an axis, a rolling element is captured in the helix path allowing rotation of the blade root about the axis and the helix path having a helix angle orientated and matched to the rolling element to ensure such rotation to turn the blade root in a counter direction about the axis and when subject to an expected or predetermined radial force.

Preferably, the rolling element defines a bearing in the helix path.

Preferably, the helix angle is arranged to radially displace and provide a counter moment to the turning moment. The helix angle is up to ten degrees and preferably about three degrees across the axis.

Preferably, blade mounting incorporates at least one stop lock to define a range for rotation of the blade.

Preferably, the stop lock is deployable.

Preferably, the stop lock is positioned to limit the rotation of the blade to any one or more of maximum thrust, cruise thrust, fine, brake, reverse, flat or feathered pitch.

Preferably, a plurality of stop locks is provided to provide angular position the blade for a number of defined engine operating conditions.

Preferably, the blade root is associated with a pitch control mechanism to selectively turn the blade root in use.

Preferably, the mounting includes a counterweight associated with the root to act in association with the rolling element in the helix path to turn the blade root in the counter direction.

Preferably, the engine is a turboprop or propfan engine utilised for aircraft propulsion. Alternatively, the engine is a turbofan with variable pitch blades within a casing; the casing is trenched opposite tips of the blades.

Embodiments of aspects of the present invention will now be described by way of example and with reference to the accompanying drawings in which:
Figure 1 provides a schematic illustration of a turboprop engine configuration;
Figure 2 is a schematic illustration of a blade subject to a radial force in accordance with aspects of the present invention;
Figure 3 is a schematic cross section of a blade mounting in accordance with aspects of the present invention;

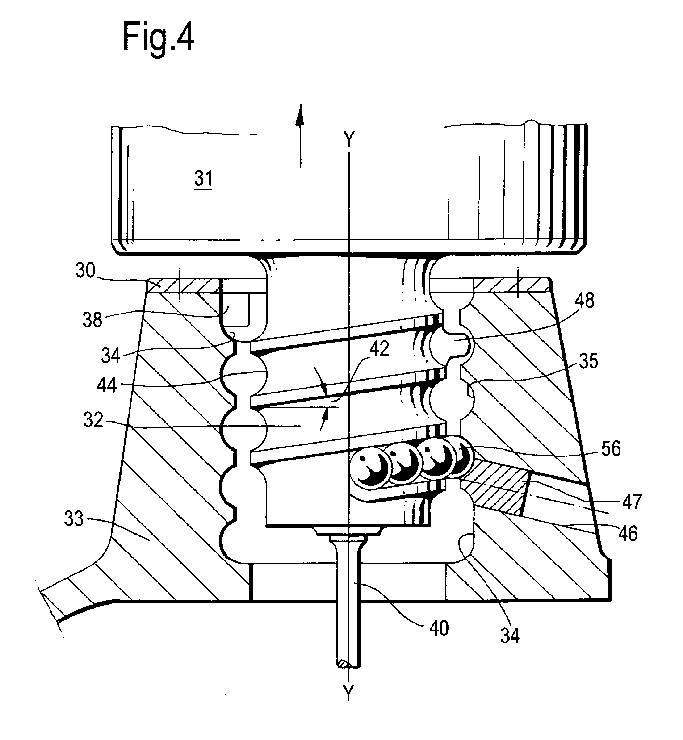

Figure 4 shows an alternative embodiment of the invention incorporating a "crowded'' bearing race;
Figure 5 and Figure 5a are schematic illustrations of rolling elements within a cage respectively as a perspective view and a plan view across A-A in accordance with aspects of the present invention;
Figure 6 is a schematic illustration of "crowded" rolling element without a cage;
Figure 7 is a schematic plan view illustrating use of stop locks in order to define a rotation range for a blade mounting in accordance with aspects of the present invention;
Figure 8 is a schematic plan illustrating a further use of a stop lock; and,
Figure 9 is a graphic representation of anti-clockwise moment and clockwise moment over a range from a flat pitch angle to a feathered pitch angle for a blade.

As indicated above for improved operational performance variable pitch blades are particularly advantageous. However, the hydraulic or mechanical mechanism utilised for achieving such variable pitch may fail leading to hazardous conditions with regard to excessive rotation speeds and possibly high energy debris release. Thus, a fail safe system must be provided. These fail safe systems can lock the pitch of the blade or utilise counter weights to force turning to a feathering blade pitch. Pitch locking mechanisms are complicated and result in the blade retaining a set high forward drag configuration whilst counter balance systems have a significant weight penalty generally undesirable with regard to aircraft propulsion.

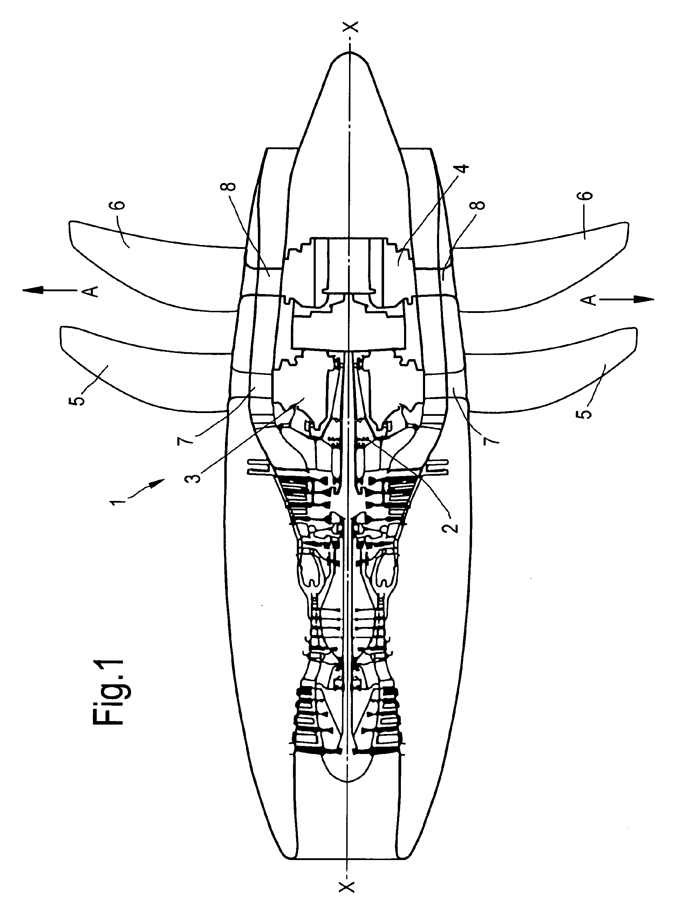

Figure 1 provides a schematic illustration of a cross section of a typical engine configuration in which a blade mounting arrangement in accordance with aspects of the present invention will be utilised. The engine configuration 1 incorporates a gas turbine engine including compressor and turbine stages in order that a shaft 2 can drive sets of blades 5, 6 through gearboxes 3, 4. An alternative variable blade pitch engine includes configurations where the propeller or fan is driven by an interleaved turbine and not a gear box. Aspects of the present invention relate to any variable pitch blade engine where failure of the variable pitch mechanism may lead to run away. As indicated above it is these blades 5, 6 which provide propulsion in a way which is more efficient particularly at lower speeds than a jet engine. In order to improve efficiency further these blades 5, 6 will have variable pitch provided through blade mountings 7, 8 and in particular variable pitch mechanisms located within these mounting 7, 8. It is when these variable pitch mechanisms fail that the blades 5, 6 can then turn as a result of centrifugal radial forces as the blades rotate to the orientation of less resistance and drag. This radial force is schematically illustrated in the direction of arrowheads A in figure 1.

It will be appreciated that without restraint of the pitch variation mechanism the blades 5, 6 are relatively free to rotate generally upon pivots and therefore due to the nature of the aerofoil configuration of the blades 5, 6 a centrifugal turning moment (CTM) is created. This centrifugal turning moment (CTM) as indicated previously tends to turn the blades into a flat configuration with reduced drag and resistance in the direction of rotation. Clearly, with reduced dragging resistance the engine can accelerate and as indicated can result in further damage and disintegration to the engine and/or particularly the blades 5, 6.

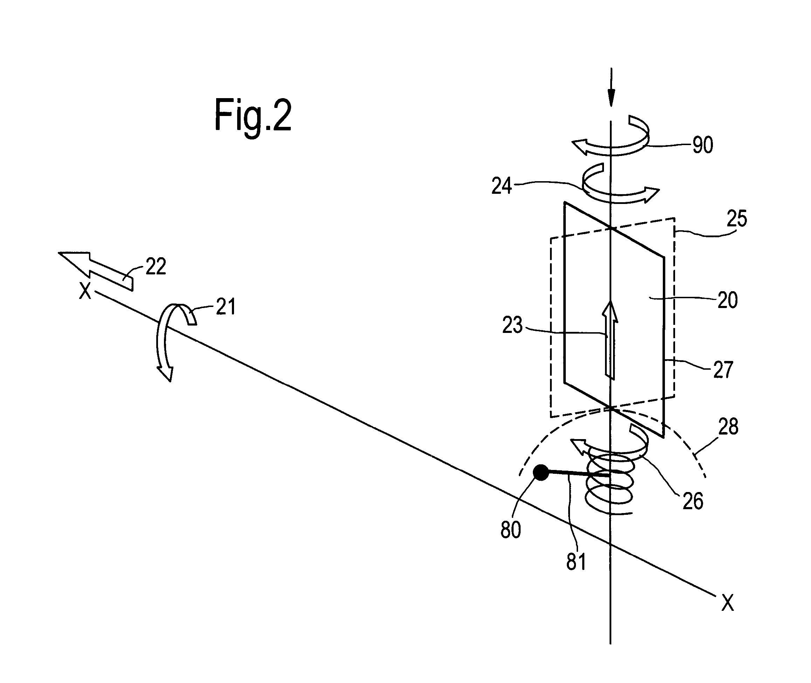

Aspects of the present invention provide a means for supporting blades on a rotating hub which utilises the advantages of a counter balance weight solution, that is to say turning the blade in an opposite direction to the centrifugal turning moment without the heavy weight penalties of such counter balance weight approaches previously provided. Figure 2 provides a schematic illustration of the forces and turning moments presented to a blade 20 having a variable pitch mounting. The blade 20 is secured to a hub (not shown) which in turn rotates about an axis X-X in an engine configuration. The direction of rotation is shown by arrowhead 21. Generally in use it will be understood that the blade 21 within an engine (not shown) will provide propulsion in the direction of arrowhead 22 and therefore there will be airflow in the opposite direction. In normal use the blade 20 will be secured upon a pitch variation mechanism and robustly held in the desired pitch configuration such that the aerofoil nature of the blade 20 generates thrust in a most efficient manner. Aspects of the present invention relate to situations when the variable pitch mechanism fails.

It will be understood that the blade 21 is rapidly rotated about the axis X-X and therefore there is a significant radial centrifugal force 23. The radial force in association with the aerofoil configuration of the blade 20 causes a centrifugal turning moment (CTM) which tends to turn the blade 20 in the direction of arrowheads 24 into a flat pitch shown by broken lines 25. As can be seen this is substantially perpendicular and across the axis X-X and so provides less drag resistance. The aerofoil also has an aerodynamic turning moment (ATM) 90 which partly counteracts the CTM and is typically about 25% of the CTM. This invention therefore seeks to fully counteract the dominant CTM.

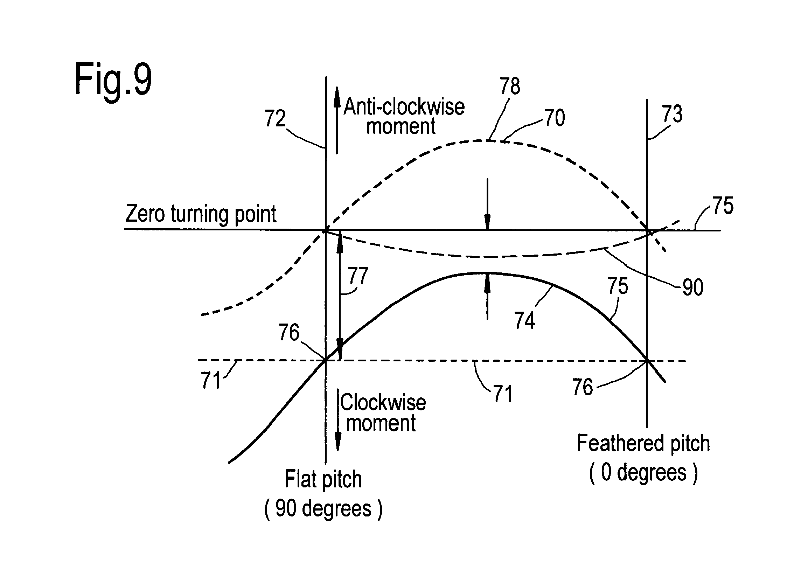

In accordance with aspects of the present invention a counter turning moment is generated by a combination of the mass of the blade 20 and the radial outward translation due to radial centrifugal force 23. This counter turning moment generates rotation in a counter direction illustrated by arrowhead 26. In such circumstance the opposing turning moments 24 (CTM), 26 (helix counter turning moment) result in a bias moment and a position for the blade 20 between the flat pitch position illustrated by broken lines 25 and a coarser pitch position illustrated by solid line 27. This relationship is illustrated later with regard to figure 9. In such circumstances a degree of drag is maintained by the blade 20 and therefore excessive speed is avoided. In practice the counter turning moment 26 would be set to be always greater than the CTM 24 for all expected conditions to ensure "safe" feathering of the blade 20.

To generate the counter turning movement a helix bearing is provided by a helix pitch in which a rolling element combination is captured. The helix path in terms of its orientation, dimensions and in particular its helix angle are matched with acceptable rolling element sizes for the installation to ensure the value of the counter turning moment with the available radial force due to blade mass as well as rotational speed is sufficient.

It will be understood that in a practical embodiment a plurality of blades 20 will be located upon appropriate blade mountings about a circumference 28 and the axis X-X. This circumference 28 will normally be provided by a hub (not shown) and the axis X-X defined by a rotating shaft upon which the hub providing the circumference 28 is located. In such circumstances 28 each blade will provide a component of an overall drag coefficient limiting rotational speed.

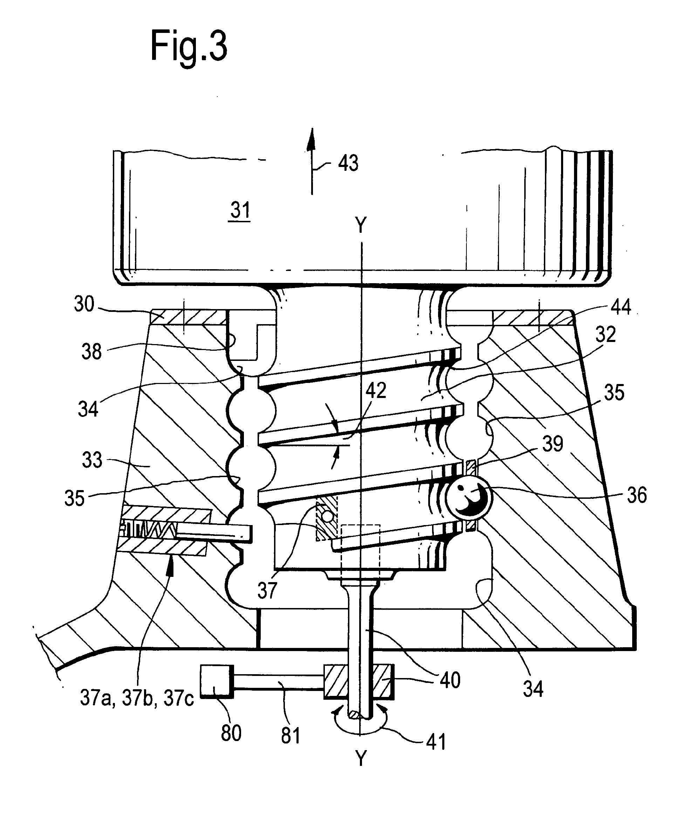

As indicated above aspects of the present invention provide a blade mounting so that the mass of the blade as well as the radial centrifugal force generate a turning moment in a counter direction to the natural centrifugal turning moment (CTM) of each blade. In accordance with a preferred embodiment of the present invention the blade mounting incorporates a helix bearing. Figure 3 provides a schematic cross section of a blade mounting in accordance with aspects of the present invention. The counter moment to turn the blade in a counter direction to the CTM is achieved through the blade unscrewing against the helical bearing.

In accordance with aspects of the present invention a blade 31 is associated with a blade root 32 in which a helical bearing arrangement is provided in order to create a counter moment as indicated using the mass of the blade 31 and a radial translation generated through centrifugal action.

The blade root 32 is located within a hub or disc 33 and in particular an aperture 34 incorporating a helix trace 35. The helix trace 35 is in a groove worked into the aperture 34. A surface of the blade root 32 and the helix trace 35 define a helix path within which roller elements 36 are located. Only one roller element 36 is illustrated in figure 3 for clarity but it will be appreciated that such elements 36 extend generally completely about the helix path defined between the root 32 and the helix trace 35. As illustrated the roller elements 36 are generally balls which act within the helix path to define the helical bearing to present the root 32 and therefore the blade 31 in use. As illustrated the trace 35 may be in the aperture 35 but alternatively a helix trace may be provided in the root 32 or preferably both to define the helix path. If the helix trace is only provided to one side of the helix path then the roller elements need to be constrained in a cage or otherwise in order to provide the turning action in accordance with aspects of the present invention. The cage or constraint will be secured to the root or aperture wall as required.

The extent of the helix path is defined by the lock stops 37, 38 positioned within the aperture 34. Thus, upon assembly the root 32 will be effectively screwed into position along the helical bearing defined by the roller elements 36. The roller elements 36 are generally loaded into a retaining cage 39 to retain position and precipitate such screw assembly of the root 32 into the hub or disc 33. Once in position a locking plate 30 will generally be located in order to position the stop lock 38. In such circumstances the blade 31 upon the root 32 can turn along and in a counter direction range defined between the locks stops 37, 38.

As indicated above aspects of the present invention are particularly directed to rotor or blade assemblies in which there is variable adjustment of the pitch of the blades 31 for improved performance. In such circumstances in accordance with aspects of the present invention a pitch control mechanism 40 is provided to enable adjustment of the blade 31 orientation and pitch in normal operational use. The mechanism 40 generally comprises a shaft schematically illustrated as secured to a base part of the root 32 to enable turning in the direction of arrowheads 41 and so adjust the orientation of the blade 31. In normal use the pitch control mechanism will robustly present and hold the blade 31 in the desired pitch. It is when the pitch control mechanism fails and therefore such robust presentation is no longer provided that aspects of the present invention are utilised in order to prevent over-speeding.

As indicated previously a blade root 32 supported simply upon a failed pitch control mechanism can turn about the mounting shaft of that mechanism such that the blade may turn into a flat low rotational drag configuration enabling the engine to over-speed. By aspects of the present invention and through provision of a helical bearing combination the radial force generated by turning of the hub or disc 33 is utilised in combination with the mass of the blade to drive a counter moment maintaining at least some coarse aspect to the blade orientation for drag resistance and so limit rotational speed.

As indicated above once the pitch control mechanism has failed, and in particular if the presentational shaft of the pitch control mechanism is free, it will be understood that the blade root and therefore the blade can turn relatively freely in the direction of arrowheads 41 about an axis Y-Y. Without some form of restraint, whether that be a pitch locking mechanism or a counter weight mechanism, the blade will turn to the configuration of least resistance, that is to say flat with limited, if any, drag. By aspects of the present invention, and in particular through provision of a helix angle 42, a counter moment is created to turn the root 32 and therefore the blade 31 in the counter direction to that expected for least resistance with the aerofoil configuration of the blade 31. It will be appreciated that it is the helix angle 42 which generates the counter moment and therefore the angle chosen will depend upon desired operational performance.

The nature of a helical bearing means that the centrifugal force is pulling the blade radially outwards in the direction of arrowhead 43 which causes the blade to rotate. The outward radial force in accordance with aspects of the present invention is utilised to generate the counter moment. The helix angle 42 is chosen and adjusted to give the required turning moment to counter the normal aerofoil centrifugal turning moment (CTM) as a bias towards the flat configuration.

In order to ensure that a desired level of rotational drag is achieved by placing the blade 31 in a coarse configuration it will be understood generally the counter moment will be chosen to be greater than and normally a multiple of the natural aerofoil centrifugal turning moment (CTM). It will be understood that the counter moment and the centrifugal turning moment (CTM) will effectively be balanced to retain the coarser blade configuration. Thus, the counter moment must exceed the aerofoil centrifugal turning moment (CTM) to leave the blade towed into a coarser configuration to maintain a drag level necessary to limit rotational speed.

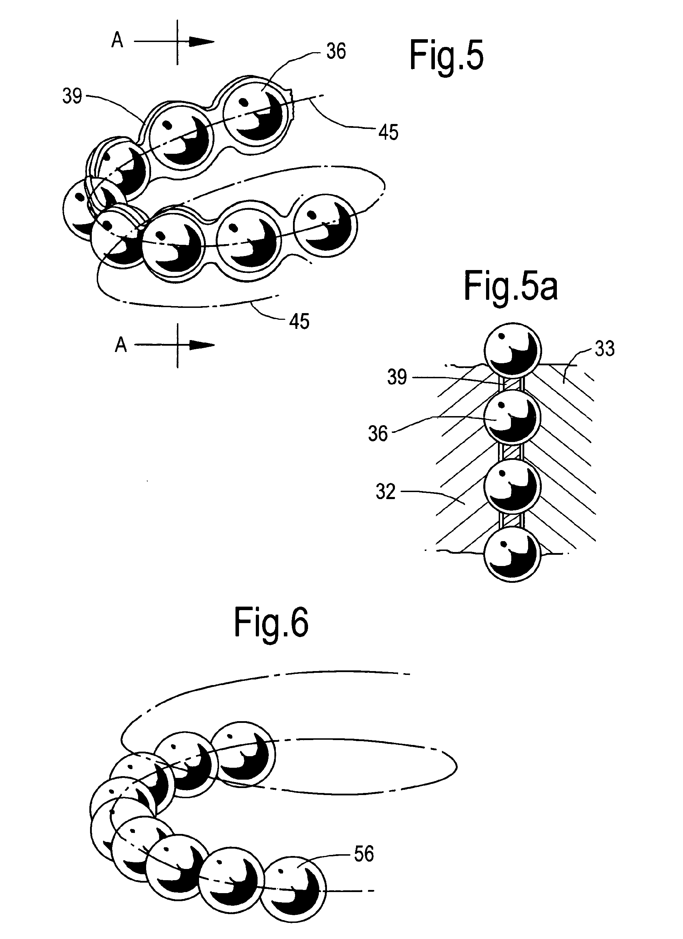

Figure 5 illustrates a rolling element 36 located within the cage 39 in order to maintain position in the blade mounting in accordance with aspects of the present invention. It will be understood that a cage 39 is necessary to control location of the rolling element 36 relative to the root 32 and aperture 34 of the hub or disc 33. A cage 39 is particular necessary as described above if the root 32 does not include a reciprocal helical trace 44 or vice versa for ease of manufacture or assembly. In such circumstance it will be appreciated that a helix path 45 is defined for the rolling elements 36 in the space between the helix trace and the blade root. The rolling elements 36 utilise the incline provided by the helix angle 42 to generate the counter moment to turn the blade 31 when subject to radial force 33 due to centrifugal effects.

Figure 6 is a section at A-A taken from figure 5 showing the engagement between the cage 39 and race 32 thereby holding the elements 36 in place to prevent crowding. The cage 39 also enables assembly and disassembly of the bearing. The crowded rolling elements act to maximise the number of elements within a given radial span and thereby reduce the CF induced load reacted by a single element.

The rotational or turning range is defined between the stops 37, 38. The position of the stops 37, 38 will be to leave the blade 43 turned towards a coarser configuration sometimes referred to as a forward-aft or feathering configuration for the blade 31. The stops 37, 38 are located within the hub or disc 33 and as will be illustrated below with regard to figure 5 effectively decide the acceptable range of orientations in pitch control mechanism failure conditions.

As indicated above for assembly generally the locking plate 30 will be removed to enable the blade and in particular the root 32 to be screwed into position within the aperture 34 along the roller elements 36. The pitch control mechanism 40 will be associated with the root 32 and the locking plate 30 located in order to provide the lock stop 38 to define the range for the roller elements 36 in the cage 39.

Once assembled, the extent of blade pitch rotation in normal use is not limited to between the stops 37, 38. The root 32 can simply be turned by the mechanism and the rolling elements 26 of the helical beam. Engagement with the rolling elements 36 retains the root 32 and therefore the blade 31 in position relative to the hub or disc 33. In such circumstances in normal operation adjustment of the blade 32 is achieved as previously through the pitch control mechanism 40. The counter moment as well as the natural CTM of the blade is governed by the retention of the root 32 upon the pitch control mechanism. If the control mechanism fails then the opposed counter moment and natural CTM act within the range defined by the stops 37, 38.

With respect to choice of the helix angle 42 it will be appreciated that this angle 42 generally allows turning of the blade 31 by providing a means of utilising the radial force and mass of the blade 31 to drive turning. This turning will result in a slight outward movement of the blade 31 also in the direction of the radial force 43. However, with regard to turboprop arrangement it will be appreciated that the blades 31 are not constrained within a casing and such movement will be acceptable. If the blades 31 are within a casing further consideration with regard to the helix angle 42 must be made such that a balance is struck between achieving an appropriate value for the counter moment as a result of the angle 42 and the potential outwards displacement of the blade 31 causing clash with a casing.

Figure 6 illustrates an alternative arrangement where the helical cage is removed and replaced by a simple "crowded" bearing 56. Figure 6 illustrates the crowded bearing arrangement. This enables an increased number of elements 56 to reduce individual element load. This arrangement is particularly advantageous in cases of small helix angle 4Z (approximately 1 degree) where the rolling element size is likely to be reduced. Loading of the elements into the helical track 44, following location of the blade 31 within the hub 33, is through a loading hole 46. Once, the elements are loaded, they are secured in the helical path by a secured, but removable plug 47. In this arrangement the turning of the blade 31 about axis Y-Y is restricted by the stop locks 38 secured to the hub and stop lock 48 secured to the blade hub 32.

As indicated above aspects of the present invention have particular use with regard to turboprop and propfan engines but mountings in accordance with aspects of the present invention could also be utilised with regard turbofan engines where there are variable pitch blades within a casing. In such circumstances as described care must be taken with regard to blade clash with the casing. Alternatively, the casing itself may include trenching, that is to say a groove in the casing in which tips of the blades are located. Such trenching may be to limit leakage but in accordance with aspects of the present invention will also provide a depth into which radially displaced blades in accordance with aspects of the present invention as a result of movement on the helical bearing can be accommodated.

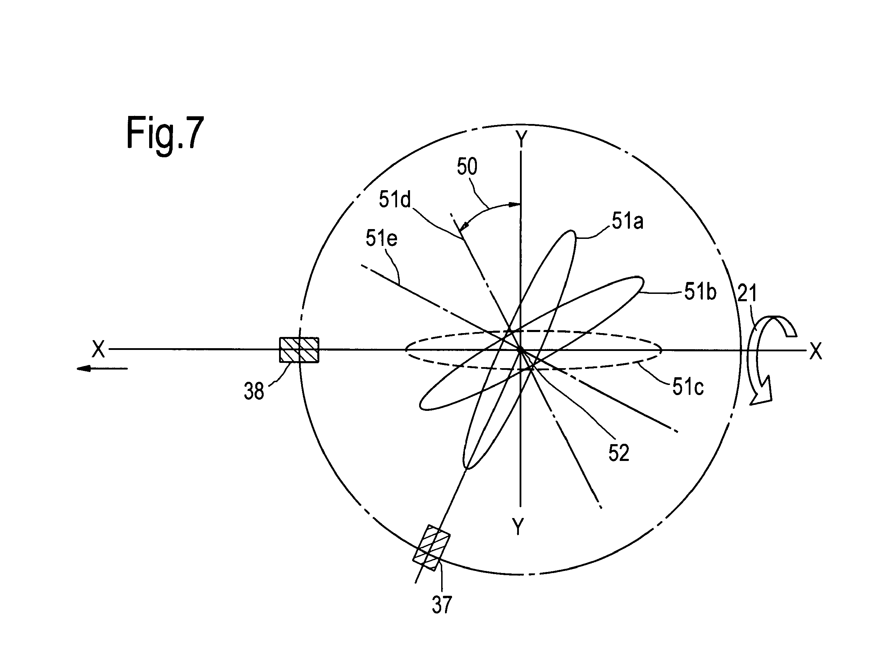

In order to avoid over-speeding as indicated aspects of the present invention are directed to ensuring that the pitch of a blade remains sufficiently coarse and therefore feathered to maintain some drag. Figure 7 provides a schematic plan view of blade configurations in accordance with aspects of the present invention. A blade 51 in accordance with aspects of the present invention is limited to a pitch range from a fine pitch defined by blade 51a to a coarse pitch defined by blade 51b. The blade rotation is in the direction of arrowhead 21 and in the event of pitch control failure the preferred movement under centrifugal forces is towards "feather", that is to say the blade moves towards the perpendicular to the direction of rotation shown by broken line 51c. As indicated previously the blade 51 is located upon a blade mounting in accordance with aspects of the present invention which incorporates a helical bearing. In normal use the blade 51 can be rotated about an axis 52 to a desired pitch using a pitch control mechanism (not shown). If the pitch control mechanism fails then as indicated without a safety mechanism or a blade mounting in accordance with aspects of the present invention the blade 51 will move to a fine pitch configuration 51a or even a flat pitch configuration aligned with an axis Y-Y. Such a fine or flat configuration as indicated previously has limited rotational drag and therefore potential for over-speeding within an engine driving blade rotation.

In order to provide the limitations in pitch control mechanism fail conditions between the pitch configurations defined by blade 51a, 51b as indicated stops 37, 38 are used to engage the rolling elements in the cage 39 and/or for blade root 32. The rolling elements 36 will engage a bottom stop 37 in one pitch orientation and a top stop 38 in another pitch configuration between configurations of blades 51a, 51b. Thus, as indicated the stops 37, 38 are arranged on the blade root 32 and hub 33 to limit the range of turning of the root 32 and therefore configurations for the blade 51 (shown as blade 31 in figure 3).

It will also be appreciated that the blades 51 in accordance with aspects of the present invention may be turned by the pitch variation mechanism to a brake or reverse pitch configuration illustrated by broken lines 51d, 51e. These blade configurations allow reverse thrust and as will be described later require movement across the fine or flat pitch configuration. Nevertheless, the period of time in the flat or fine pitch configurations is limited and therefore over speeding of the engine is minimal. In the reverse pitch configurations as indicated the range will be between the configurations shown by broken lines 51d, 51e which continue to provide some rotational drag and therefore limit engine over speeding. The blades in such circumstances will have a pitch angle 55 in the range 20 to 60 degrees from a flat configuration defined by axis Y-Y.

The helix angle 42 and other aspects of the blade arrangement will normally be chosen such that the counter moment generated by the helical bearing exceeds the CTM. The stop 37, 38 prevents the blade moving to a position to fully relieve the CTM and so maintains desirable drag for speed limitation. Operating ranges for the blades can be defined such that there is no excessive stressing to the blade 31.

It will be understood in some engines it is desirable to provide reverse thrust. Such reverse thrust is achieved through moving the blade through a brake pitch position which generally involves rotation of the blade through the flat configuration, that is to say, beyond the position defined by the stop 37, 38 as described above. In order to accommodate for this facility the stops may be electively displaceable to allow turning of the blade to the reverse thrust position. However, it will be understood that such movement to the reverse blade configuration through the flat blade configuration is specifically driven by the blade pitch control mechanism and therefore the time period at the flat configuration is low. Thus, the engine will not run away and over-speed as the blade is driven through the flat configuration to a reversed thrust configuration where again drag will be applied to limit rotation speed. It will also be understood that the blade mounting in accordance with aspects of the present invention utilises centrifugal force as well as blade mass in order to generate the counter moment for turning. The radial force to cause such turning and counter moment will only be applied for a split second during the transit through the flat configuration and therefore in normal operation the rolling elements will not engage the stops 37, 38 unless the pitch control mechanism fails. It will be understood that the pitch control mechanism restrains both the centrifugal turning moment caused by the aerofoil of the blade as well as the counter moment generated in accordance with aspects of the present invention through the helical path.

It will be appreciated that the helical path and in particular through judicious choice of the helix angle 42 a counter moment is generated to the centrifugal turning moment without the necessity of using a counter weight arrangement as with previous mountings. In such circumstances particularly with regard to aircraft engines there are significant weight benefits as well as simplicity of installation. Aspects of the present invention provide a robust fail safe mechanism with regard to avoiding over-speeding whilst enabling a simple installation method whereby the blade root 32 can be screwed into the hub or rotor disc 33 and then retained in position by a lock 38 as part of the retaining plate 30. It will be understood that a blade in accordance with aspects of the present invention may be located within a mounting simply comprising a helical bearing configuration as described above. Alternatively, a secondary bearing to the hub or disc 33 can be provided on a simply rotary basis to provide a more substantial rotatable retention mechanism for the root 32 within the hub or disc 33.

As mentioned previously, brake or reverse pitch is typically achieved by turning through flat pitch. In the event of a higher rotational speed design or operation it is advantageous to avoid operation through flat pitch.

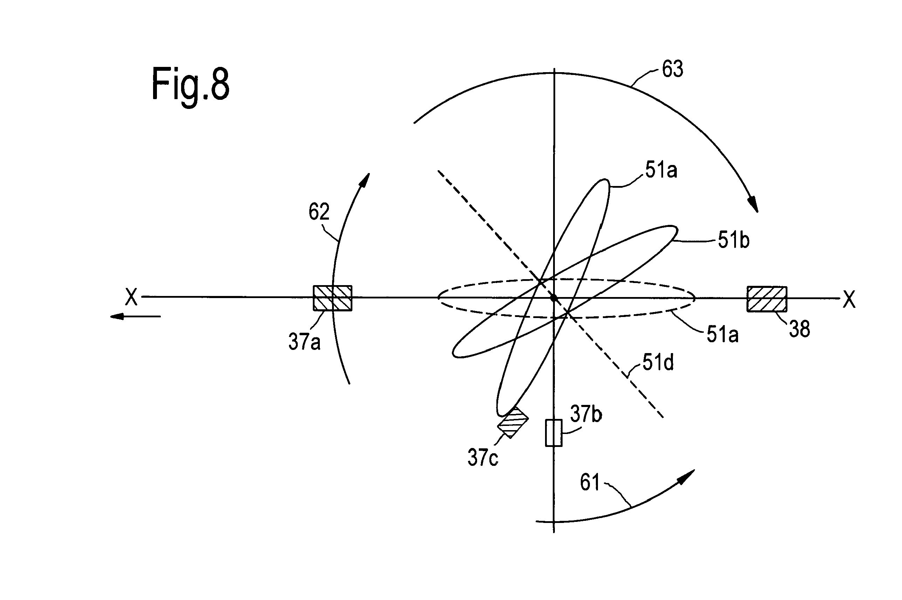

Figure 8 illustrates an alternative mode of operation where by virtue of a continuous helical track on the blade and hub turning about the blade axis can be up to 360 degrees. This allows reverse pitch 51d to be achieved by turning in an anti-clockwise direction 61 or a clockwise direction 62. The clockwise direction 62 avoids normal operation through the undesirable flat pitch position. However, in the event of failure of the pitch control mechanism, with reverse pitch achieved through following direction 62, the blade would need to continue to turn through direction 63 to achieve a safe position 51a perpendicular to the engine rotation driven by the counter turning moment forcing the blade in the clockwise direction. The hub mounted stop lock 38 would need to be positioned appropriately to engage the hub through stop lock 37 or 48 and ensure the blade come to rest in the safe position 51c. In this alternative arrangement deployable locks 37a and 37b may be used to avoid inadvertent thrust reverse. This will enable an extended rotation range of the blade where by reverse or brake pitch can be achieved by either clockwise or anti-clockwise rotation and still achieve a "safe" position perpendicular to the direction of rotation in event of pitch control failure.

The deployable locks 37a and 37b are positioned at the extremities of desired pitch rotation; however, one or more additional deployable locks 37c may be positioned between locks 37a and 37b. As shown in figure 8 deployable lock 37c is positioned to prevent rotation beyond fine pitch. In other embodiments, the stop lock may be positioned to limit the rotation of the blade to any of maximum thrust, cruise thrust, brake, reverse, flat or feathered pitch. As will be appreciated a plurality of stop locks may be provided to provide angular position the blade for a number of defined engine operating conditions.

As indicated above, aspects of the present invention are directed towards providing a counter turning moment to the centrifugal turning moment (CTM) of a blade, when mounted upon a failed and therefore free pitch variation mechanism. Figure 9 provides a graphic representation of the centrifugal turning moment (CTM) 70 and the counter turning moment 71 due to unscrewing about the helical bearing due to the mass of the blade and centrifugal force upon rolling elements. As can be seen the centrifugal turning moment 70 (defined as 24 in figure 2) defines a curve between a flat pitch 72 and a feathered pitch 73. In such circumstances without the counter turning moment in accordance with aspects of the present invention as can be seen there will be an anti-clockwise turning moment variable dependent upon the angular position of the blade at the time of the pitch variation mechanism failure. As can be seen the maximum centrifugal turning moment is at an angle of approximately 45 degrees between the flat pitch 72 and the feathered 73 configurations. The aerodynamic turning moment (ATM) is indicated by the curve 90 (in figure 9). This is typically opposite to and smaller than the CTM. The ATM however, will contribute to the CTM opposing moment created by the unscrewing about the helical bearing. As will be appreciated a blade typically operates about this 45 degree position and therefore significant anti-clockwise moments are provided.

Curve 74 illustrates the resultant moment between the centrifugal turning moment 70, the ATM 90 and the counter turning moment 71 as a result of the helical bearing in accordance with aspects of the present invention. As can be seen if line 76 is considered as a zero turning moment then the counter turning moment 71 acts to displace the effective base line of the CTM by a factor illustrated by point 76 on the ordinate defining turning moment in an anti-clockwise and a clockwise direction. This point 76 is displaced below the zero moment 75 by a value 77. Thus, provided the value 77 is greater than the maximum turning moment (CTM) defines at 45 degrees and shown on curve 70 about position 78 it will be understood that the resultant curve 75 will never reach the zero turning moment and therefore there will always be an anti-clockwise moment as a result of the helical bearing action upon the blade. This anti-clockwise moment will act always to turn the blade into a position where there is some rotational drag and therefore prevent rotational speed run away.

Figure 9 depicts a constant tip or blade speed, however, it should be understood that the curves will be more complex with varying speed caused by varying the propeller pitch.

It is understood that in the event of an engine design with a propeller direction of rotation opposite to that illustrated in figure 2 arrow 21, then the reference to anti-clockwise and clockwise moments will also be reversed.

As indicated above aspects of the present invention provide for a counter turning moment without the need for a counter weight mechanism. As indicated previously such counter weight mechanisms, which rotates with the blade and mounting, have particular disadvantages in terms of their weight penalty in aircraft installations. As aspects of the present invention through provision of a helical bearing provides a counter turning moment it will be appreciated that a reduced mass for the counter weight may be used if a mounting arrangement in accordance with aspects of the present invention is combined with a counter weight mechanism. In such circumstances greater design freedom may be achieved by combining a prior counter weight mechanism with the present helical bearing mechanism. It will be understood that the present helical bearing mounting arrangement depends upon the helix angle and rolling element dimensions to achieve the counter turning moment. In certain installations it may be difficult to reconcile the easily achievable counter turning moments with acceptable helical angles and rolling element dimensions with operational space requirements. In such circumstances a much reduced counter weight mechanism may be combined with a mounting in accordance with aspects of the present invention such that the combination achieves necessary functional effect with regard to a failed pitch variation mechanism but without excessive weight penalties as a result of the counter weight mechanism or presenting difficulties with respect to achieving counter turning moments with a helical bearing in accordance with aspects of the present invention. The counter weight mechanism would be positioned as shown in figure 2. Thus, a counter weight 80 would be located on a moment arm 81 and operated in order to limit rotational speed by generating a counter moment turning of the blade 20.

Modifications and alternations to aspects of the present invention described will be appreciated by those skilled in the art. In such circumstances it will be understood that the stops may be simply latch surfaces or comprise wedge engagements with the rolling elements such that there is progressive restraint dependent upon the forces applied. Furthermore, the rolling elements 36 may be open or retained within a closed vessel with a lubricating oil acting to facilitate the rotation and/or providing dampening fluid flow restraint past the rolling elements 36 in rotation one way or the other.

## Claims

1. A blade mounting (7,8) to secure a blade (5,6;20,31,51) or rotor within a hub (28,33), the mounting having a root (32) extending into the hub, the mounting **characterised by** a helix trace (35) associated with the blade root to define a helix path (45) between them about an axis (Y-Y; 52), a rolling element (36) is captured in the helix path allowing rotation of the blade root about the axis and the helix path having a helix angle (42) orientated and matched to the rolling element to ensure such rotation to turn the blade root in a counter direction (26) about the axis and when subject to an expected or predetermined radial force (23).

2. A mounting as claimed in claim 1 wherein the rolling element defines a bearing in the helix path.

3. A mounting as claimed in any preceding claim wherein the helix angle is arranged to radially displace and provide a counter moment (26) to the turning moment.

4. A mounting as claimed in any preceding claim wherein the helix angle is up to ten degrees and preferably about three degrees across the axis.

5. A mounting as claimed in any preceding claim wherein blade mounting incorporates at least one stop lock (37a, b, c, 38) to define a range for rotation of the blade.

6. A mounting as claimed in claim 5 wherein the stop lock (37a, b, c, 38) is deployable.

7. A mounting as claimed in any one of claims 5-6 wherein the stop lock (37a, b, c, 38) is positioned to limit the rotation of the blade to any one or more of maximum thrust, cruise thrust, fine, brake, reverse, flat or feathered pitch.

8. A mounting as claimed in any one of claims 5-6 wherein a plurality of stop locks are provided to provide angular position the blade for a number of defined engine operating conditions.

9. A mounting as claimed in any preceding claim wherein the blade root is associated with a pitch control mechanism (40) to selectively turn the blade root in use.

10. A mounting as claimed in any preceding claim wherein the mounting includes a counterweight (80) associated with the root to act in association with the rolling element in the helix path to turn the blade root in the counter direction.

11. An engine comprising a blade mounting as claimed in any one of claims 1-10 wherein the engine is a turboprop or propfan engine utilised for aircraft propulsion.

12. An engine comprising a blade mounting as claimed in any one of claims 1-10 wherein the engine is a turbofan with variable pitch blades within a casing, the casing is trenched opposite tips of the blades.
